# EUROPEAN PATENT SPECIFICATION

(11) **EP 3 236 343 B1**
(45) Date of publication and mention of the grant of the patent: **25.08.2021**
(21) Application number: 15868880.4
(22) Date of filing: 02.04.2015
(51) Int. Cl.: G06F 3/0488, G06F 1/16, G06F 3/0484

(54) **CUSTOMIZING METHOD, RESPONDING METHOD AND MOBILE TERMINAL OF SELF-DEFINED TOUCH**
ANPASSUNGSVERFAHREN, ANTWORTVERFAHREN UND MOBILES ENDGERÄT MIT SELBSTDEFINIERTER BERÜHRUNG
PROCÉDÉ DE PERSONNALISATION, PROCÉDÉ DE RÉPONSE ET TERMINAL MOBILE DE TOUCHER AUTO-DÉFINI

(30) Priority: 18.12.2014 CN 201410799611
(43) Date of publication of application: 25.10.2017
(73) Proprietor: JRD Communication Inc., Shenzhen, Guangdong 518057 (CN)
(72) Inventor: CHEN, Yichong, Shenzhen, Guangdong (CN)
(74) Representative: Brachmann, Roland W.
(86) International application number: PCT/CN2015/075771
(87) International publication number: WO 2016/095363

(56) References cited:
- CN-A- 102 122 229
- CN-A- 102 662 463
- CN-A- 102 937 869
- CN-A- 103 324 392
- CN-A- 103 870 034
- US-A1- 2006 197 750
- US-A1- 2013 063 891

## Description

The present invention relates to the field of mobile terminal technologies, and in particular relates to a response method and a mobile terminal for user-defined touch.

Right now, electronic apparatuses are more and more extensively used in daily life. Along with the development of touchscreens, touchscreens are gradually taking the place of keyboards in electronic apparatuses, and touch-control input is increasingly used. For electronic apparatuses that currently have the capability of touch input, a corresponding touch operation needs to be performed to implement a function. To apply functions of electronic apparatuses in an expansive range, manufacturers of touchscreens or electronic apparatuses would typically set touch operations corresponding to the functions. To some functions, however, a user may desire to be able to set related touch actions on his own.

When a touch action is customized according the prior art, it is typically required that the touch action is set up on the front of an electronic apparatus. When the touch action is specifically performed to implement the related function, two hands are typically needed for the operation so as to carry out the touch action on the front of the electronic apparatus, leading to an inconvenient operation for users.

Prior art is disclosed in CN102937869.

The technical problem that the present invention primarily solves is to provide a response method and a mobile terminal for user-defined touch, which can customize touch actions corresponding to functions of a mobile terminal by using gripping positions on the sides of the mobile terminal when a user is holding the mobile terminal.

This problem is solved according to the features of the independent claims. Further embodiments result from the depending claims. Described embodiments that are not covered by the claims, are not part of the invention.

To solve the above technical problem, an example of the present invention provides a customization method for user-defined touch, comprising: the mobile terminal turns on the touch customization mode; detecting if the mobile terminal has a touch response, if there is no response, repeating the step of detecting if the mobile terminal has a touch response, and going to the subsequent steps if there is a response; in the touch customization mode, acquiring the distribution information of gripping positions at least on the sides of the mobile terminal when a user is holding the mobile terminal, and determining functions of the mobile terminal corresponding to the distribution information of gripping positions; saving the association relation between the distribution information of gripping positions and functions of the mobile terminal corresponding thereto.

To solve the above technical problem, an example of the present invention provides a response method for user-defined touch, comprising: a mobile terminal acquiring the distribution information of gripping positions at least on the sides of the mobile terminal when a user is holding the mobile terminal; determining if an association relation exists between the distribution information of gripping positions and at least one function of the mobile terminal; if it exists, carrying out the at least one function of the mobile terminal, otherwise, do not carry out the at least one function of the mobile terminal.

According to an example the step of acquiring the distribution information of gripping positions at least on the sides of the mobile terminal when a user is holding the mobile terminal comprises: acquiring the distribution information of gripping positions on the sides of the mobile terminal when the user is holding the mobile terminal, and the information of touch actions on the sides or front of the mobile terminal. The step of determining if an association relation exists between the distribution information of gripping positions and at least one function of the mobile terminal comprises: determining if an association relation exists between the distribution information of gripping positions and the information of touch actions and at least one function of the mobile terminal.

According to an example the step of acquiring the distribution information of gripping positions at least on the sides of the mobile terminal when a user is holding the mobile terminal comprises: when the user holds the mobile terminal, the touchscreen of the mobile terminal senses a touch response generated by a hand of the user approaching or touching the side of the touchscreen; according to the settings of the side axes in the mobile terminal, recording the side axis coordinate information corresponding to the gripping sensed by the touchscreen, the coordinate information representing the distribution information of gripping positions.

To solve the above technical problem, an example of the present invention further provides a mobile terminal for user-defined touch, comprising: a customization unit configured to turn on the touch customization mode; a sensing unit connected to the customization unit and configured to, in the touch customization mode, acquire the distribution information of gripping positions at least on the sides of the mobile terminal when a user is holding the mobile terminal, and determine functions of the mobile terminal corresponding to the distribution information of gripping positions; a memory unit connected to the customization unit and the sensing unit, and configured to save the association relation between the distribution information of gripping positions and functions of the mobile terminal corresponding thereto.

According to an example the sensing unit is further configured to, in the touch customization mode, acquire the distribution information of gripping positions on the sides of the mobile terminal when the user is holding the mobile terminal, and the information of touch actions on the sides or front of the mobile terminal, and determine functions of the mobile terminal corresponding to the distribution information of gripping positions and the information of touch actions on the sides or front of the mobile terminal; the memory unit is further configured to save the association relation between the distribution information of gripping positions and the information of touch actions and the functions of the mobile terminal corresponding thereto.

According to an example the mobile terminal further comprises a coordinate axis unit, which is connected to the sensing unit and the memory unit; the sensing unit is a touchscreen, and when the user holds the mobile terminal, the touchscreen senses a touch response generated by a hand of the user approaching or touching the side of the touchscreen; the coordinate axis unit is configured to record the side axis coordinate information corresponding to the gripping sensed by the touchscreen, and transmit the coordinate information as the distribution information of gripping positions to the memory unit.

According to an example the touchscreen comprises a body part disposed on the front of the mobile terminal and a bending part extending from the body part and bent to the sides of the mobile terminal.

Advantageous effects of the examples of the present application are: unlike the prior art, the mobile terminal according the present invention first turns on the touch customization mode, and in this mode, acquires the distribution information of gripping positions on the side of the mobile terminal generated when a user is gripping the mobile terminal. When using a mobile terminal, a user typically needs to grip the mobile terminal, which then generates gripping positions on the side of the mobile terminal, the distribution information of gripping positions is recorded, the distribution information of gripping positions is associated with functions of the mobile terminal, and the association relation is saved so as to complete the customization of touch actions corresponding to the functions of the mobile terminal. When the touch customization is completed, moreover, a user can implement the functions of the mobile terminal just through simple gripping actions, which better fits users' operation habits. When a user is holding the mobile terminal, the present invention can customize touch actions corresponding to functions of a mobile terminal by using the distribution of gripping positions on the sides of the mobile terminal.

The aforementioned characteristics, features and advantages of the invention as well as the way they are achieved will be further illustrated in connection with the following examples and considerations as discussed in view of the figures.
- Fig.1: is a flow chart of a first example of the customization method for user-defined touch;
- Fig.2: is a flow chart of a second example of the customization method for user-defined touch;
- Fig.3: illustrates the selection interface of functions of a mobile terminal in need of customized touch actions;
- Fig.4: illustrates the distribution of gripping positions when a user is holding the mobile terminal;
- Fig.5: illustrates the gripping positions when a user is holding the mobile terminal and that fingers are sliding;
- Fig.6: is a flow chart of a first embodiment of the response method for user-defined touch according to the present invention;

- Fig.7: is a flow chart of a second embodiment of the response method for user-defined touch according to the present invention;
- Fig.8: illustrates the structure of a first embodiment of the mobile terminal for user-defined touch according to the present invention.

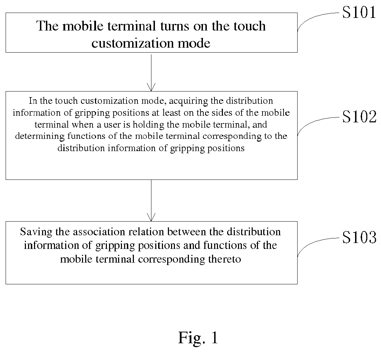

Referring to Fig.1, Fig.1 is a flow chart of a first example of a customization method for user-defined touch, the present embodiment provides a customization method, comprising the following steps: S101: the mobile terminal turns on the touch customization mode.

In the present embodiment, all mobile terminals with the capability of touch input can realize touch customization, wherein the mobile terminals with the capability of touch input may be cell phones, tablets, etc., and the touch input may be achieved through capacitive or inductive touchscreens, or may be achieved through thermosensitive, pressure or biological signal sensors disposed inside the mobile terminals.

A mobile terminal may turn on the touch customization mode through the operating system, and by setting up virtual keys that are turned on in the system functions, and when the touch customization mode is turned on, functions of the mobile terminal may be customized, e.g. unlocking, locking the screen, adjusting the volume, sliding the screen, etc.; alternatively, the touch customization mode may be turned on through an APP, if a user desires to customize touch operations corresponding to functions of the mobile terminal, then the APP is installed, and the APP is opened to implement touch customization; if the use does not need customization of relevant touch actions, there is no need to install the APP in the mobile terminal.

S102: in the touch customization mode, acquiring the distribution information of gripping positions at least on the sides of the mobile terminal when a user is holding the mobile terminal, and determining functions of the mobile terminal corresponding to the distribution information of gripping positions.

When the touch customization mode is turned on, the user holds the mobile terminal, and correspondingly there are gripping positions on the sides of the mobile terminal, if the mobile terminal has a relatively small size, the distribution of gripping positions will appear on both sides even with single-handed operations; if the mobile terminal has a relatively large size, the distribution of gripping positions will only appear on one single side with single-handed operations, while operations with both hands will lead to the distribution of gripping positions on both sides. In the present embodiment, the distribution information of gripping positions on either single side or double sides can be used to implement customization in light of the above situations.

The mobile terminal acquires the distribution information of gripping positions through a touchscreen or sensor. For example, a touchscreen that is bendable to the sides can sense the touch by a user hand during gripping, and then the distribution information of gripping positions can be learned through the position of the touchscreen where the sensing takes place; alternatively, a plurality of temperature sensors may be disposed on the sides of the mobile terminal, when the user is gripping, the temperature sensors corresponding to the hands can sense the temperature, and the positions of these temperature sensors that sense the temperature are the gripping positions; it can be thought that the temperature sensors may be replaced by pressure sensors or biological signal sensors.

Certainly, during the implementation of touch customization, touch actions performed by the user not only may comprise the distribution of gripping positions, but also may comprise other touch actions during gripping, for example, the thumb slides up and down along a side during gripping, clicking actions by one single finger or multiple fingers during gripping, and sliding or clicking on the front of the mobile terminal during gripping. Similarly, the mobile terminal may also acquire associated information of the above touch actions through a touchscreen or sensors.

At the same time, it is necessary to determine in this step functions of the mobile terminal corresponding to the touch customization by the user, namely to associate the touch actions performed by the user with the functions of the mobile terminal.

S103: saving the association relation between the distribution information of gripping positions and functions of the mobile terminal corresponding thereto.

When the user is holding the mobile terminal and performs a touch action, both the user and the mobile terminal can specify the function of the mobile terminal corresponding to the holding action. When the mobile terminal acquires the distribution information of gripping positions, therefore, the distribution information of gripping positions is associated with the corresponding functions of the mobile terminal, and the association relation is saved. If the information of the touch actions of the user further comprises information like other clicking or sliding in addition to the distribution information of gripping positions, all of the touch action information are associated with the corresponding functions of the mobile terminal, and the association relation is saved. Unlike the prior art, the mobile terminal in the present embodiment first turns on the touch customization mode, and in this mode, acquires the distribution information of gripping positions at least on the sides of the mobile terminal generated when a user is gripping the mobile terminal. When using a mobile terminal, a user typically needs to grip the mobile terminal, which then correspondingly generates gripping positions on the sides of the mobile terminal, the distribution information of gripping positions is recorded, the distribution information of gripping positions is associated with functions of the mobile terminal, and the association relation is saved so as to complete the customization of touch actions corresponding to the functions of the mobile terminal. When the touch customization is completed, moreover, a user can implement the functions of the mobile terminal just through simple gripping actions, which makes the user operations more convenient and simple, and better fits users' operation habits. When a user is holding the mobile terminal, the present invention can customize touch actions corresponding to functions of a mobile terminal by using the distribution of gripping positions on the sides of the mobile terminal.

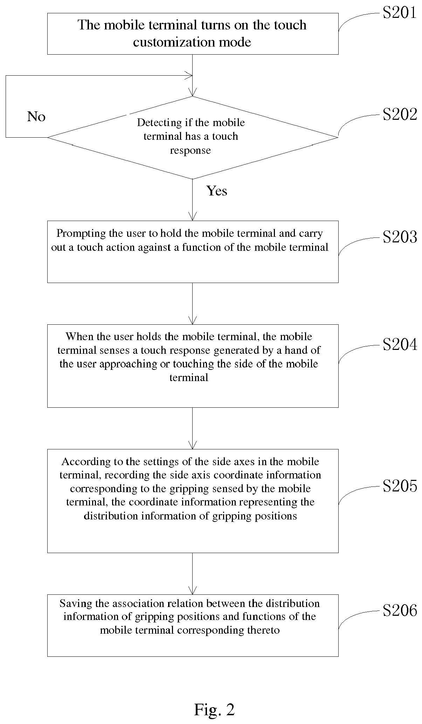

Referring to Fig.2, Fig.2 is a flow chart of a second example of the customization method for user-defined touch, the present embodiment provides a customization method, comprising the following steps: S201: the mobile terminal turns on the touch customization mode.

Step S201 in the present embodiment is similar to Step S101 in the first embodiment of the customization method, which will not be described herein. It should be noted that the mobile terminal in the present embodiment has a related APP for implementing touch customization, and the opening of the APP is turning on the touch customization mode. In the present embodiment, moreover, the mobile terminal is a cell phone, which can achieve the input of a touch action through the touchscreen that is bendable to the sides.

S202: detecting if the mobile terminal has a touch response, if there is a response, going to Step S203, and if there is no response, repeating the step S202.

After entering the touch customization mode, touch response detection is carried out, which needs to detect if a corresponding response amount is generated by the sides and front of the touchscreen. To implement the detection, a plurality of detection points may be disposed on the touchscreen, for example, two end points and the central point of a touchscreen side, four corners and the central point of the touchscreen front, and the calibration of the touchscreen may be implemented at the same time with the detection. During the detection, if each detection point has response amount, it is concluded that the detection is passed, and proceeds to Step S203, namely the touch customization can be achieved through this APP; if there is no response, then the detection action is repeated. Whether the touch detection is passed may also be determined through if a response takes place at the sides during gripping.

S203: prompting the user to hold the mobile terminal and carry out a touch action against a function of the mobile terminal.

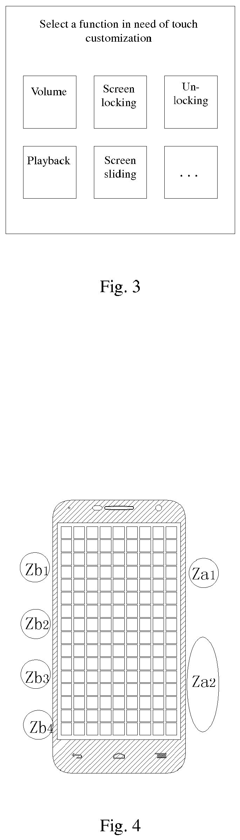

When the detection in Step S202 is passed, the mobile terminal prompts the user to select a function for touch customization. Specifically, when the test is completed, the APP enters the function selection interface, and can select functions such as volume adjustment, screen locking, image zoom in and out, and screen sliding. Referring to Fig.3, Fig.3 illustrates the selection interface of functions of a mobile terminal in need of customized touch actions. When a function of the mobile terminal is selected, the user enters the customization interface, and can begin the customization of touch actions. During the customization, the user needs to hold the mobile terminal, namely generating touch responses on the sides of the mobile terminal.

Step S203 may also be carried out prior to Step S201. First, determine a function of a mobile terminal in need of customized touch actions, and then turn on the touch customization mode correspondingly for this function.

S204: when the user holds the mobile terminal, the mobile terminal senses a touch response generated by a hand of the user approaching or touching the side of the mobile terminal

During this process, the mobile terminal senses a touch response at least on the side, and at the same time, the user may also perform other touch actions, for example, the touch action to lock the screen is to grip both sides of a cell phone; the touch action to adjust the volume is to grip both sides of a cell phone and slide the index finger on the side; the touch action to zoom in or out an image is to grip both sides of a cell phone and tap twice the side screen with a thumb; the touch action to slide the screen is to grip both sides of a cell phone and slide the thumb on the side.

To facilitate a user to set up, when a touch action is performed, the touch action that the user is performing can be simulated and displayed correspondingly on the customization interface of the APP. When the touch action is completed, moreover, it allows the user to determine if the touch action acquired by the mobile terminal is correct.

S205: according to the settings of the side axes in the mobile terminal, recording the side axis coordinate information corresponding to the gripping sensed by the mobile terminal, the coordinate information representing the distribution information of gripping positions.

Specifically, all of the above touch actions are recorded through the settings of coordinate axes, the front touchscreen of the mobile terminal has a two-dimensional coordinate axis (X, Y), the side touchscreen has two one-dimensional coordinate axes Za and Zb. Different gripping actions have different coordinate information. Referring to Fig.4, Fig.4 illustrates the distribution of gripping positions when a user is holding the mobile terminal. In Fig.4, the touch action is gripping both sides of a cell phone, then there are two touch points on the coordinate axis Z1, four touch points on the coordinate axis Z2, and the coordinate information is recorded as ((Za₁, Za₂), (Zb₁, Zb₂, Zb₃, Zb₄));

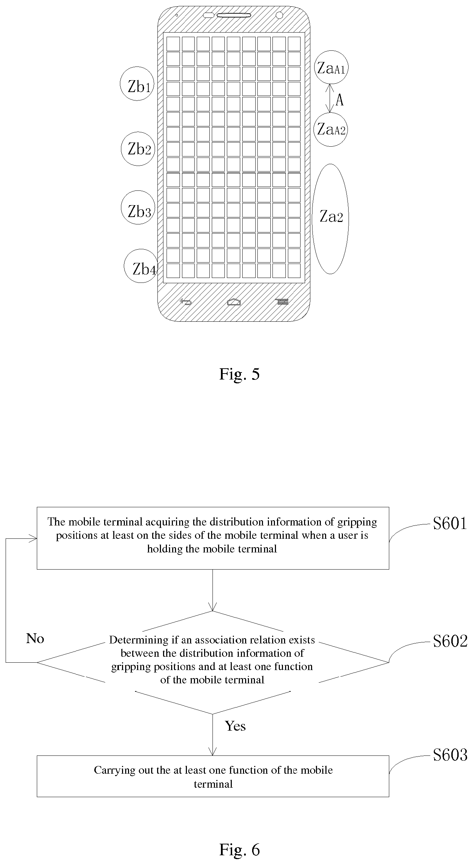

In the present embodiment, vector information can also be recorded through the coordinate information, namely a sliding touch action can be recorded through the vector information. Referring to Fig.5, Fig.5 illustrates the gripping positions when a user is holding the mobile terminal and that fingers are sliding. Fig.5 contains the information of gripping positions and the sliding information. For the thumb sliding, for example, the recorded coordinate information is ((A, Za₂), (Zbi, Zb₂, Zb₃, Zb₄)), wherein A is a vector, and the coordinate position is from Za_{A1} to Za_{A2}, which is recorded as (Za_{A1}, Za_{A2}). For a touch action with multiple clicking, multiple pulse signals are generated at the same position of the touchscreen to realize the sensing, and the action of multiple clicking is recorded with a counter disposed in the mobile terminal. Specifically, the corresponding touch action information thereof comprises the information of gripping positions and the corresponding information of clicking times. With the gripping mode in Fig.4 as an example, the touch action information is ((Zai, Za₂), ((Zb₁, t), Zb₂, Zb₃, Zb₄)), which indicates the number of clicking t at the same coordinate position Zb₁, and the corresponding touch action by the user is gripping the cell phone and making t clicks by the index finger, wherein the number of times t≥2.

When holding the mobile terminal, the user can certainly further perform touch actions on the front of the touchscreen, including the sliding, clicking and touching by a finger on the front. For the front touch actions, related information is recorded through the X axis and the Y axis.

S206: saving the association relation between the distribution information of gripping positions and functions of the mobile terminal corresponding thereto.

When the settings of touch actions corresponding to functions of the mobile terminal are completed, the association between the touch action information and the function of the mobile terminal is completed via the APP, wherein the touch action information comprises the information of gripping positions. Lastly, the association relation is saved in the mobile terminal.

Unlike the prior art, after the mobile terminal in the present embodiment turns on the touch customization mode, in this mode, a user selects an associated function of the mobile terminal for touch customization. During the process of touch customization, the user needs to grip the mobile terminal, and generates corresponding gripping positions on the sides, based on which the user may continue to perform touch actions, and lastly, the distribution of gripping positions and the function of the mobile terminal are associated and the association relation is saved. When the touch customization is completed, the user performs simple touch actions on the basis of holding the mobile terminal, which can implement corresponding functions of the mobile terminal and make the user operations more convenient and simple.

Referring to Fig.6, Fig.6 is a flow chart of a first embodiment of the response method for user-defined touch according to the present invention, and the response method provided by the present embodiment comprises the following steps:
S601: a mobile terminal acquiring the distribution information of gripping positions at least on the sides of the mobile terminal when a user is holding the mobile terminal.

To implement functions of a mobile terminal, a user holds the mobile terminal and performs touch actions, and at this time, the mobile terminal acquires the distribution information of gripping positions at least on the sides of the mobile terminal, the acquiring process is similar to the step S102 in the first embodiment of the customization method for user-defined touch, which will not be described herein.

S602: determining if an association relation exists between the distribution information of gripping positions and at least one function of the mobile terminal; if it exists, going to Step S603, if it does not exist, returning to Step S601.

When the touch customization is completed, the association relation between the functions of the mobile terminal and touch actions has been saved in the mobile terminal. In the step S602, according to the association relation saved in the mobile terminal, determining if the distribution information of gripping positions obtained in the above step S601 is associated with at least one function of the mobile terminal, if the association exists, it is concluded that the touch action produced when the user holds the mobile terminal is valid, and it can trigger the mobile terminal to implement the related function. If the association does not exist, the function desired by the user cannot take place, then returning to Step S601, in which the user holds the mobile terminal again to perform a touch action, while the mobile terminal re-acquires the distribution information of gripping positions at least on the sides of the mobile terminal.

S603: carrying out the at least one function of the mobile terminal.

As the above description of the step S602, when the association relation is determined, starting to carry out the at least one function of the mobile terminal.

Unlike the prior art, the mobile terminal in the present embodiment has completed the touch customization and saved the association relation between touch actions and functions. When a user performs a touch action so as to implement a function of the mobile terminal, the mobile terminal first acquires the distribution information of gripping positions at least on the sides of the mobile terminal when the user is holding the mobile terminal, and then according to the saved association relation, determines if an association relation exists between the distribution information of gripping positions and a function of the mobile terminal, if an association relation exists, carries out the function. Through this embodiment, the user just needs to perform simple gripping actions, or perform simple touch actions on the basis of gripping, to implement related functions of the mobile terminal, such that user operations are more convenient and simple, which complies with the use habit of users.

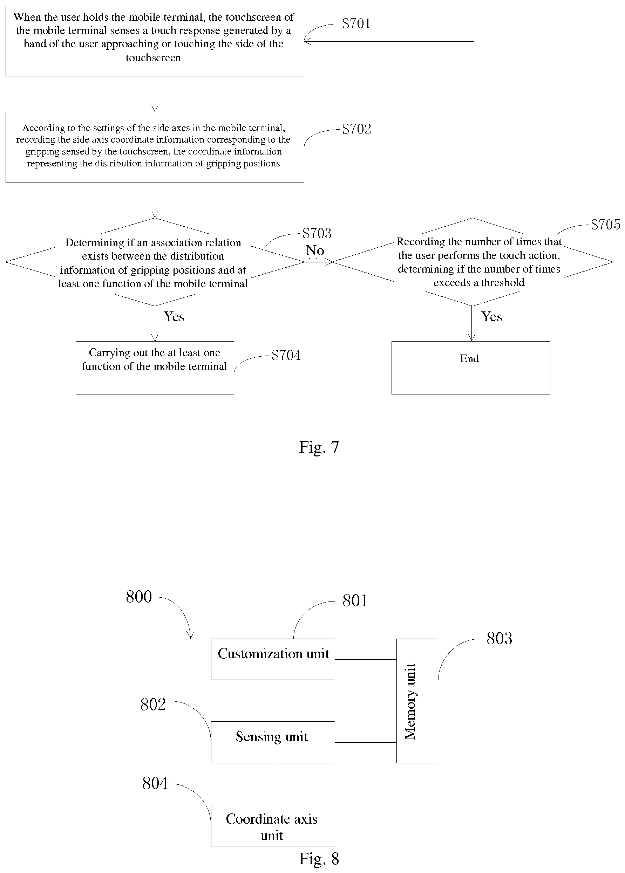

Referring to Fig.7, Fig.7 is a flow chart of a second embodiment of the response method for user-defined touch according to the present invention, and the response method provided by the present embodiment comprises the following steps:
S701: when the user holds the mobile terminal, the touchscreen of the mobile terminal senses a touch response generated by a hand of the user approaching or touching the side of the touchscreen.

In the present embodiment, moreover, the mobile terminal is a cell phone and senses touch actions by a user through the touchscreen. The sensing process in the step S701 is similar to the step S204 in the second embodiment of the customization method for user-defined touch, which will not be described herein.

S702: according to the settings of the side axes in the mobile terminal, recording the side axis coordinate information corresponding to the gripping sensed by the touchscreen, the coordinate information representing the distribution information of gripping positions.

The sensing process in the step S702 is similar to the step S205 in the second embodiment of the customization method for user-defined touch, which will not be described herein.

S703: determining if an association relation exists between the distribution information of gripping positions and at least one function of the mobile terminal; if it exists, going to Step S704, if it does not exist, going to Step S705.

When acquiring the distribution information of gripping positions according to touch actions by a user, the mobile terminal may simultaneously acquire the information of touch actions. It determines if an association relation exists between the acquired information and a function of the mobile terminal, if the association exists, it is concluded that the touch action produced when the user holds the mobile terminal is valid, and it can trigger the mobile terminal to implement the related function. If the association does not exist, the function desired by the user cannot take place, the number of times that the user performs the touch actions is recorded, and Step S705 is executed.

S704: carrying out the at least one function of the mobile terminal.

As the above description of the step S703, when the association relation is determined, starting to carry out the at least one function of the mobile terminal.

S705: Recording the number of times that the user performs the touch action, determining if the number of times exceeds a threshold, and if the threshold is exceeded, stopping the touch response; if the threshold is not exceeded, returning to the step S701.

When the number of times of touch actions is recorded, determining if the number of times of touch actions exceeds a threshold, and if the threshold is exceeded, stopping the touch response; if it is not exceeded, re-acquiring the information of touch actions. The purpose of this step is that, if a touch action has been repeated many times and it is determined that no association exists in all cases, it is necessary to end the acquisition of the distribution information of gripping positions by the mobile terminal so as not to further waste time or power. Therefore, a threshold is set for the number of times of touch actions in the step S705, when the number of times of touch actions exceeds the threshold, stopping the action by the mobile terminal to acquire the distribution information of gripping positions, and if the number of times does not exceed the threshold, continuing the touch action.

Unlike the prior art, the mobile terminal in the present embodiment has completed the touch customization and saved the association relation between touch actions and functions. When a user performs a touch action so as to implement a function of the mobile terminal, the mobile terminal first acquires the distribution information of gripping positions at least on the sides of the mobile terminal when the user is holding the mobile terminal, and then according to the saved association relation, determines if an association relation exists between the distribution information of gripping positions and a function of the mobile terminal, if an association relation exists, carries out the function. Through this embodiment, the user just needs to perform simple gripping actions, or perform simple touch actions on the basis of gripping, to implement related functions of the mobile terminal, such that user operations are more convenient and simple, which complies with the use habit of users.

Referring to Fig.8, Fig.8 illustrates the structure of a first embodiment of the mobile terminal for user-defined touch according to the present invention. The present embodiment provides a mobile terminal 800, which comprises a customization unit 801, a sensing unit 802, a memory unit 803 and a coordinate axis unit 804. The customization unit 801 is connected to the sensing unit 802, the memory unit 803 is connected to the customization unit 801 and the sensing unit 802, and the coordinate axis unit 804 is connected to the sensing unit 802.

The specific operating process of the mobile terminal 800 is as follows:
S801: the customization unit 801 turns on the touch customization mode;
S802: the customization unit 801 triggers the sensing unit 802 to prompt the user to take the touch test, the sensing unit 702 receives the touch signal and transmits to the customization unit for determining the test result;
S803: when the customization unit 801 determines that the touch test is passed, it prompts the user to select a function for touch customization;
S804: the sensing unit 802 senses and acquires the distribution information of gripping positions at least on the sides of the mobile terminal 800 when the user is holding the mobile terminal 800;

Specifically, the sensing unit 802 is a touchscreen, the touchscreen comprises a body part disposed on the front of the mobile terminal and a bending part extending from the body part and bent to the sides, the touchscreen is connected to the coordinate axis unit 804, and can record specific gripping positions and touch actions through the coordinate axis unit 804.

S805: the customization unit 801 associates the distribution information of gripping positions with the function selected by the user;
if the sensing unit 802 senses the distribution information of gripping positions and the information of touch actions, then in the step S805, the customization unit 801 associates both the distribution information of gripping positions and the information of touch actions with corresponding functions.

S806: the memory unit 803 saves the association relation.

Functions of the above all units correspond to the steps in the second embodiment of the customization method for user-defined touch, which will not be specifically described herein.

Unlike the prior art, the present embodiment achieves customization of touch actions through the customization mode, acquires, by a sensing module, the distribution information of gripping positions generated on the sides when a user is holding a mobile terminal, and saves, by a memory module, the association between the gripping information and touch actions. When the touch customization is completed, the user performs simple touch actions on the basis of holding the mobile terminal, which can implement corresponding functions of the mobile terminal and make the user operations more convenient and simple.

Only embodiments of the present invention are described above, which do not intend to limit the scope of the present invention.

## Claims

1. A response method for user-defined touch, wherein the method comprises the following steps:
- a mobile terminal (800) acquiring distribution information of gripping positions at least on sides of the mobile terminal when a user is holding the mobile terminal (S601);
- determining if an association relation exists between the distribution information of gripping positions and at least one function of the mobile terminal (S602; S703);
- if it exists, carrying out at least one function of the mobile terminal (S603; S704), otherwise, do not carry out the at least one function of the mobile terminal, and
- if it does not exist: recording the number of times that the user performs gripping at least on sides of the mobile terminal and determining if the number of times exceeds a threshold (S705), and if the threshold is exceeded, stopping the response; if the threshold is not exceeded, returning to acquiring distribution information of gripping positions at least on sides of the mobile terminal.

2. The response method according to claim 1, wherein the step of acquiring the distribution information comprises:
- a touchscreen of the mobile terminal senses a touch response generated when a hand of the user approaches or touches the side of the mobile terminal when the user holds the mobile terminal (S204, S701);
- according to the settings of side axes in the mobile terminal, recording side axis coordinate information corresponding to the gripping sensed by the touchscreen, the coordinate information representing the distribution information of gripping positions (S205, S702).

3. The response method according to any of the preceding claims, wherein the step of acquiring the distribution information of gripping positions at least on the sides of the mobile terminal when a user is holding the mobile terminal further comprises:
acquiring the information of touch actions on the sides or front of the mobile terminal; and
the step of determining if an association relation exists between the distribution information of gripping positions and the at least one function of the mobile terminal further comprises:
determining if an association relation exists between the information of touch actions and the at least one function of the mobile terminal.

4. The response method according to any of the preceding claims, wherein the touchscreen comprises a body part disposed on the front of the mobile terminal and a bending part extending from the body part and bent to the sides of the mobile terminal.

5. The response method according to any of the preceding claims, wherein the association relation between the distribution information of gripping positions and the at least one function of the mobile terminal is customized by the following steps:
- a mobile terminal (800) turns on a touch customization mode (S201);
- detecting if the mobile terminal has a touch response (S202), if there is no response, repeating the step of detecting if the mobile terminal has a touch response, and going to following subsequent steps if there is a response:
- in the touch customization mode, acquiring distribution information of gripping positions at least on the sides of the mobile terminal when a user is holding the mobile terminal (S204, S205), and determining the at least one function of the mobile terminal that is to be associated with the distribution information of gripping positions;
- saving the association relation between the distribution information of gripping positions and the at least one function of the mobile terminal that is to be associated therewith (S206).

6. The method according to claim 5, wherein
- the step of acquiring the distribution information of gripping positions at least on the sides of the mobile terminal when a user is holding the mobile terminal further comprises acquiring information of touch actions on the sides or front of the mobile terminal,
- the step of determining the at least one function of the mobile terminal corresponding to the distribution information of gripping positions further comprises determining the at least one function corresponding to the information of the touch actions on the sides or front of the mobile terminal; and
- the step of saving the association relation between the distribution information of gripping positions and the at least one function of the mobile terminal corresponding thereto further comprises:
- saving the association relation between the distribution information of the information of touch actions and the at least one function of the mobile terminal corresponding thereto.

7. A mobile terminal (800) for user-defined touch, wherein the mobile terminal (800) is adapted to perform the steps of the method according to any of preceding claims and wherein the mobile terminal comprises:
- a customization unit (801) configured to turn on a touch customization mode;
- a sensing unit (802) connected to the customization unit and configured to, in the touch customization mode, acquire distribution information of gripping positions at least on the sides of the mobile terminal when a user is holding the mobile terminal, and determine at least one function of the mobile terminal that is to be associated with the distribution information of gripping positions;
- a memory unit (803) connected to the customization unit and the sensing unit, and configured to save the association relation between the distribution information of gripping positions and the at least one function of the mobile terminal corresponding thereto;
- wherein the mobile terminal further comprises a coordinate axis unit (804), which is connected to the sensing unit and the memory unit;
- the sensing unit is a touchscreen, and when the user holds the mobile terminal, the touchscreen senses a touch response generated by a hand of the user approaching or touching a side of the touchscreen;
- the coordinate axis unit is configured to record side axis coordinate information corresponding to the gripping sensed by the touchscreen, and transmit the coordinate information as the distribution information of gripping positions to the memory unit.

8. The mobile terminal according to claim 7, wherein the sensing unit is further configured to, in the touch customization mode, acquire the information of touch actions on the sides or front of the mobile terminal, and determine the at least one function of
the mobile terminal that is to be associated with the information of the touch actions on the sides or front of the mobile terminal;
the memory unit is further configured to save the association relation between the distribution information of gripping positions and the information of touch actions and the at least one function of the mobile terminal that is to be associated therewith.

9. The mobile terminal according to any of claims 7 to 8, wherein the touchscreen comprises a body part disposed on the front of the mobile terminal and a bending part extending from the body part and bent to the sides of the mobile terminal.

## Patentansprüche

1. Verfahren zur Reaktion auf eine benutzerdefinierte Berührung, wobei das Verfahren die folgenden Schritte umfasst:
- Erfassen von Informationen zur Verteilung von Griffpositionen zumindest an Seiten eines mobilen Endgeräts (800), wenn ein Benutzer das mobile Endgerät hält, durch das mobile Endgerät (S601),
- Bestimmen, ob ein Zugehörigkeitsverhältnis zwischen den Informationen zur Verteilung von Griffpositionen und mindestens einer Funktion des mobilen Endgeräts besteht (S602, S703),
- wenn eines besteht: Ausführen mindestens einer Funktion des mobilen Endgeräts (S603, S704), sonst kein Ausführen der mindestens einen Funktion des mobilen Endgeräts und
- wenn keines besteht: Aufzeichnen der Anzahl an Malen, die der Benutzer das Greifen an zumindest Seiten des mobilen Endgeräts ausführt, und Bestimmen, ob die Anzahl an Malen einen Grenzwert überschreitet (S705), und wenn der Grenzwert überschritten wird, Stoppen der Reaktion, wenn der Grenzwert nicht überschritten wird, Zurückkehren zum Erfassen der Informationen zur Verteilung von Griffpositionen zumindest an Seiten des mobilen Endgeräts.

2. Verfahren nach Anspruch 1, wobei der Schritt des Erfassens der Informationen zur Verteilung Folgendes umfasst:
- ein Touchscreen des mobilen Endgeräts tastet eine Berührungsreaktion ab, die erzeugt wird, wenn sich eine Hand des Benutzers der Seite des mobilen Endgeräts nähert oder diese berührt, wenn der Benutzer das mobile Endgerät hält (S204, S701),
- gemäß den Einstellungen von Seitenachsen in dem mobilen Endgerät: Aufzeichnen von Seitenachsenkoordinateninformationen, die dem von dem Touchscreen abgetasteten Greifen entsprechen, wobei die Koordinateninformationen die Informationen zur Verteilung von Griffpositionen darstellen (S205, S702).

3. Verfahren nach einem der vorhergehenden Ansprüche, wobei der Schritt des Erfassens von Informationen zur Verteilung von Griffpositionen zumindest an Seiten des mobilen Endgeräts, wenn ein Benutzer das mobile Endgerät hält, ferner Folgendes umfasst:
Erfassen von Informationen zu Berührungsaktionen an den Seiten oder der Vorderseite des mobilen Endgeräts und
der Schritt des Bestimmens, ob ein Zugehörigkeitsverhältnis zwischen den Informationen zur Verteilung von Griffpositionen und der mindestens einen Funktion des mobilen Endgeräts besteht, ferner Folgendes umfasst:
Bestimmen, ob ein Zugehörigkeitsverhältnis zwischen den Informationen zu Berührungsaktionen und der mindestens einen Funktion des mobilen Endgeräts besteht.

4. Verfahren nach einem der vorhergehenden Ansprüche, wobei der Touchscreen einen Hauptteil umfasst, der an der Vorderseite des mobilen Endgeräts angeordnet ist, und einen sich biegenden Teil, der sich von dem Hauptteil aus erstreckt und zu den Seiten des mobilen Endgeräts gebogen ist.

5. Verfahren nach einem der vorhergehenden Ansprüche, wobei das Zugehörigkeitsverhältnis zwischen den Informationen zur Verteilung von Griffpositionen und der mindestens einen Funktion des mobilen Endgeräts durch die folgenden Schritte spezifisch angepasst wird:
- ein mobiles Endgerät (800) schaltet einen Berührungsanpassungsmodus ein (S201),
- Erkennen, ob das mobile Endgerät eine Berührungsreaktion aufweist (S202), wenn keine Reaktion vorliegt, Wiederholen des Schrittes des Erkennens, ob das mobile Endgerät eine Berührungsreaktion aufweist, und wenn eine Reaktion vorliegt, Übergehen zu den folgenden Schritten:
- Erfassen von Informationen zur Verteilung von Griffpositionen zumindest an Seiten des mobilen Endgeräts in dem Berührungsanpassungsmodus, wenn ein Benutzer das mobile Endgerät hält (S204, S205), und Bestimmen der mindestens einen Funktion des mobilen Endgeräts, die den Informationen zur Verteilung von Griffpositionen zuzuordnen ist,
Speichern des Zugehörigkeitsverhältnisses zwischen den Informationen zur Verteilung von Griffpositionen und der mindestens einen Funktion des mobilen Endgeräts, die diesen zuzuordnen ist (S206).

6. Verfahren nach Anspruch 5, wobei:
- der Schritt des Erfassens von Informationen zur Verteilung von Griffpositionen zumindest an den Seiten des mobilen Endgeräts, wenn ein Benutzer das mobile Endgerät hält, ferner das Erfassen von Informationen zu Berührungsaktionen an den Seiten oder der Vorderseite des mobilen Endgeräts umfasst,
- der Schritt des Bestimmens der mindestens einen Funktion des mobilen Endgeräts, die den Informationen zur Verteilung von Griffpositionen entspricht, ferner das Bestimmen der mindestens einen Funktion umfasst, die den Informationen der Berührungsaktionen an den Seiten oder der Vorderseite des mobilen Endgeräts entspricht, und
- der Schritt des Speicherns des Zugehörigkeitsverhältnisses zwischen den Informationen zur Verteilung von Griffpositionen und der mindestens einen Funktion des mobilen Endgeräts, die diesen entspricht, ferner Folgendes umfasst:
- Speichern des Zugehörigkeitsverhältnisses zwischen den Informationen zur Verteilung der Informationen zu Berührungsaktionen und der mindestens einen Funktion des mobilen Endgeräts, die diesen entspricht.

7. Mobiles Endgerät (800) für eine benutzerdefinierte Berührung, wobei das mobile Endgerät (800) dafür eingerichtet ist, die Schritte des Verfahrens nach einem der vorhergehenden Ansprüche auszuführen und wobei das mobile Endgerät Folgendes umfasst:
- eine Anpassungseinheit (801), die dafür konfiguriert ist, einen Berührungsanpassungsmodus einzuschalten,
- eine Abtasteinheit (802), die mit der Anpassungseinheit verbunden und dafür konfiguriert ist, in dem Berührungsanpassungsmodus Informationen zur Verteilung von Griffpositionen zumindest an den Seiten des mobilen Endgeräts, wenn ein Benutzer das mobile Endgerät hält, zu erfassen und mindestens eine Funktion des mobilen Endgeräts zu bestimmen, die den Informationen zur Verteilung von Griffpositionen zuzuordnen ist,
- eine Speichereinheit (803), die mit der Anpassungseinheit und der Abtasteinheit verbunden und dafür konfiguriert ist, das Zugehörigkeitsverhältnis zwischen den Informationen zur Verteilung von Griffpositionen und der mindestens einen Funktion des mobilen Endgeräts, die diesen entspricht, zu speichern,
- wobei das mobile Endgerät ferner eine Koordinatenachseneinheit (804) umfasst, die mit der Abtasteinheit und der Speichereinheit verbunden ist,
- die Abtasteinheit ein Touchscreen ist und wenn der Benutzer das mobile Endgerät hält, der Touchscreen eine Berührungsreaktion abtastet, die durch eine Hand des Benutzers erzeugt wird, die sich einer Seite des Touchscreens nähert oder diese berührt,
- die Koordinatenachseneinheit dafür konfiguriert ist, Seitenachsen-Koordinateninformationen aufzuzeichnen, die den Griffen entsprechen, die durch den Touchscreen abgetastet wurden, und die Koordinateninformationen als die Informationen zur Verteilung von Griffpositionen an die Speichereinheit zu übertragen.

8. Mobiles Endgerät nach Anspruch 7, wobei die Abtasteinheit ferner dafür konfiguriert ist, in dem Berührungsanpassungsmodus die Informationen zu Berührungsaktionen an den Seiten oder der Vorderseite des mobilen Endgeräts zu erfassen und die mindestens eine Funktion des mobilen Endgeräts zu bestimmen, die den Informationen zu den Berührungsaktionen an den Seiten oder der Vorderseite des mobilen Endgeräts zuzuordnen ist,
wobei die Speichereinheit ferner dafür konfiguriert ist, das Zugehörigkeitsverhältnis zwischen den Informationen zur Verteilung von Griffpositionen und den Informationen von Berührungsaktionen und der mindestens einen Funktion des mobilen Endgeräts, die diesen zuzuordnen ist, zu speichern.

9. Mobiles Endgerät nach einem der Ansprüche 7 bis 8, wobei der Touchscreen einen Hauptteil umfasst, der an der Vorderseite des mobilen Endgeräts angeordnet ist, und einen sich biegenden Teil, der sich von dem Hauptteil aus erstreckt und zu den Seiten des mobilen Endgeräts gebogen ist.

## Revendications

1. Procédé de réponse pour un toucher auto-défini, dans lequel le procédé comprend les étapes suivantes :
l'acquisition par un terminal mobile (800) d'informations de distribution de positions de saisie au moins sur des côtés du terminal mobile lorsqu'un utilisateur tient le terminal mobile (S601) ;
la détermination de s'il existe une relation d'association entre les informations de distribution de positions de saisie et au moins une fonction du terminal mobile (S602 ; S703) ;
si elle existe, l'exécution d'au moins une fonction du terminal mobile (S603 ; S704), sinon, la non-exécution de l'au moins une fonction du terminal mobile, et
si elle n'existe pas : l'enregistrement du nombre de saisies par l'utilisateur au moins sur les côtés du terminal mobile et la détermination de si le nombre de saisies dépasse un seuil (S705), et si le seuil est dépassé, l'arrêt de la réponse ; si le seuil n'est pas dépassé, le retour à l'acquisition d'informations de distribution de positions de saisie au moins sur des côtés du terminal mobile.

2. Procédé de réponse selon la revendication 1, dans lequel l'étape d'acquisition des informations de distribution comprend :
la détection par un écran tactile du terminal mobile d'une réponse tactile générée lorsqu'une main de l'utilisateur approche de ou touche le côté du terminal mobile lorsque l'utilisateur tient le terminal mobile (S204, S701) ;
en fonction des réglages d'axes latéraux dans le terminal mobile, l'enregistrement d'informations de coordonnées d'axe latéral correspondant à la saisie détectée par l'écran tactile, les informations de coordonnées représentant les informations de distribution de positions de saisie (S205, S702).

3. Procédé de réponse selon l'une quelconque des revendications précédentes, dans lequel l'étape d'acquisition des informations de distribution de positions de saisie au moins sur les côtés du terminal mobile lorsqu'un utilisateur tient le terminal mobile comprend en outre :
l'acquisition des informations d'actions de toucher sur les côtés ou le devant du terminal mobile ; et
l'étape de détermination de s'il existe une relation d'association entre les informations de distribution de positions de saisie et l'au moins une fonction du terminal mobile comprend en outre :
la détermination de s'il existe une relation d'association entre les informations d'actions de toucher et l'au moins une fonction du terminal mobile.

4. Procédé de réponse selon l'une quelconque des revendications précédentes, dans lequel l'écran tactile comprend une partie corps disposée sur l'avant du terminal mobile et une partie pliante s'étendant depuis la partie corps et pliée vers les côtés du terminal mobile.

5. Procédé de réponse selon l'une quelconque des revendications précédentes, dans lequel la relation d'association entre les informations de distribution de positions de saisie et l'au moins une fonction du terminal mobile est personnalisée au moyen des étapes suivantes :
la mise en service par un terminal mobile (800) d'un mode de personnalisation de toucher (S201) ;
la détection de si le terminal mobile a une réponse de toucher (S202), s'il n'y a aucune réponse, la répétition de l'étape de détection de si le terminal mobile a une réponse de toucher, et le passage aux étapes successives suivantes s'il y a une réponse :
dans le mode de personnalisation de toucher, l'acquisition d'informations de distribution de positions de saisie au moins sur les côtés du terminal mobile lorsqu'un utilisateur tient le terminal mobile (S204, S205), et la détermination de l'au moins une fonction du terminal mobile qui doit être associée aux informations de distribution de positions de saisie ;
l'enregistrement de la relation d'association entre les informations de distribution de positions de saisie et l'au moins une fonction du terminal mobile qui doit leur être associée (S206).

6. Procédé selon la revendication 5, dans lequel
l'étape d'acquisition des informations de distribution de positions de saisie au moins sur les côtés du terminal mobile lorsqu'un utilisateur tient le terminal mobile comprend en outre l'acquisition d'informations d'actions de toucher sur les côtés ou sur le devant du terminal mobile,
l'étape de détermination de l'au moins une fonction du terminal mobile correspondant aux informations de distribution de positions de saisie comprend en outre la détermination de l'au moins une fonction correspondant aux informations des actions de toucher sur les côtés ou le devant du terminal mobile ; et
l'étape d'enregistrement de la relation d'association entre les informations de distribution de positions de saisie et l'au moins une fonction du terminal mobile leur correspondant comprend en outre :
l'enregistrement de la relation d'association entre les informations de distribution des informations d'actions de toucher et l'au moins une fonction du terminal mobile leur correspondant.

7. Terminal mobile (800) pour un toucher auto-défini, dans lequel le terminal mobile (800) est conçu pour exécuter les étapes du procédé selon l'une quelconque des revendications précédentes et dans lequel le terminal mobile comprend :
une unité de personnalisation (801) configurée pour mettre en service un mode de personnalisation de toucher ;
une unité de détection (802) connectée à l'unité de personnalisation et configurée pour, dans le mode de personnalisation de toucher, acquérir des informations de distribution de positions de saisie au moins sur les côtés du terminal mobile lorsqu'un utilisateur tient le terminal mobile, et déterminer au moins une fonction du terminal mobile qui doit être associée aux informations de distribution de positions de saisie ;
une unité de mémorisation (803) connectée à l'unité de personnalisation et à l'unité de détection, et configurée pour enregistrer la relation d'association entre les informations de distribution de positions de saisie et l'au moins une fonction du terminal mobile leur correspondant ;
dans lequel le terminal mobile comprend en outre une unité d'axe de coordonnées (804), qui est connectée à l'unité de détection et à l'unité de mémorisation ;
l'unité de détection est un écran tactile, et lorsque l'utilisateur tient le terminal mobile, l'écran tactile détecte une réponse tactile générée par une main de l'utilisateur s'approchant de ou touchant un côté de l'écran tactile ;
l'unité d'axe de coordonnées est configurée pour enregistrer des informations de coordonnées d'axe latéral correspondant à la saisie détectée par l'écran tactile, et transmettre les informations de coordonnées en tant qu'informations de distribution de positions de saisie à l'unité de mémorisation.

8. Terminal mobile selon la revendication 7, dans lequel l'unité de détection est en outre configurée pour, dans le mode de personnalisation de toucher, acquérir les informations d'actions de toucher sur les côtés ou le devant du terminal mobile, et déterminer l'au moins une fonction du terminal mobile qui doit être associée aux informations des actions de toucher sur les côtés ou le devant du terminal mobile ;
l'unité de mémorisation est en outre configurée pour enregistrer la relation d'association entre les informations de distribution de positions de saisie et les informations d'actions de toucher et l'au moins une fonction du terminal mobile qui doit leur être associée.

9. Terminal mobile selon l'une quelconque des revendications 7 à 8, dans lequel l'écran tactile comprend une partie corps disposée sur le devant du terminal mobile et une partie pliante s'étendant depuis la partie corps et pliée vers les côtés du terminal mobile.
